# EUROPÄISCHE PATENTSCHRIFT

(11) **EP 3 687 705 B1**
(45) Veröffentlichungstag und Bekanntmachung des Hinweises auf die Patenterteilung: **24.11.2021**
(21) Anmeldenummer: 18778862.5
(22) Anmeldetag: 20.09.2018
(51) Int. Cl.: B05B 1/30, B05B 12/04, H01F 7/18, B05B 13/04

(54) **APPLIKATOR MIT EINER INTEGRIERTEN STEUERSCHALTUNG**
APPLICATOR WITH AN EMBEDDED SWITCHING CONTROLER
APPLICATEUR AVEC CIRCUIT DE COMMANDE INTÉGRÉ

(30) Priorität: 27.09.2017 DE 102017122492
(43) Veröffentlichungstag der Anmeldung: 05.08.2020
(60) Teilanmeldung: 21202407.9
(73) Patentinhaber: Dürr Systems AG, 74321 Bietigheim-Bissingen (DE)
(72) Erfinder: FRITZ, Hans-Georg, 73760 Ostfildern (DE); WÖHR, Benjamin, 74363 Eibensbach/Güglingen (DE); KLEINER, Marcus, 74354 Besigheim (DE); BUBEK, Moritz, 71640 Ludwigsburg (DE); BEYL, Timo, 74354 Besigheim (DE); HERRE, Frank, 71739 Oberriexingen (DE); SOTZNY, Steffen, 71720 Oberstenfeld (DE); TANDLER, Daniel, 70469 Stuttgart (DE); BERNDT, Tobias, 71254 Ditzingen (DE); GEIGER, Andreas, 72172 Sulz am Neckar (DE)
(74) Vertreter: v. Bezold & Partner Patentanwälte - PartG mbB
(86) Internationale Anmeldenummer: PCT/EP2018/075472
(87) Internationale Veröffentlichungsnummer: WO 2019/063408

(56) Entgegenhaltungen:
- EP-A1- 3 213 823
- EP-A1- 3 335 801
- WO-A1-2008/131986
- WO-A1-2008/151714

## Beschreibung

Die Erfindung betrifft einen Druckkopf zur Applikation eines Beschichtungsmittels (z.B. Lack) auf ein Bauteil (z.B. Kraftfahrzeugkarosseriebauteil oder Anbauteil für ein Kraftfahrzeugkarosseriebauteil).

Aus dem Stand der Technik (z.B. US 9 108 424 B2) sind Drop-On-Demand-Druckköpfe bekannt, deren Wirkprinzip auf der Verwendung von elektromagnetischen Ventilen beruht. Dabei wird ein magnetischer Kolben (Ventilnadel) in einer Spule geführt und durch Stromzufuhr in die Spule angehoben. Dadurch wird eine Ventilöffnung freigegeben und das Fluid (z.B. die Tinte) kann in Abhängigkeit von der Öffnungszeit als Tropfen bzw. als "Strahlportion" verschiedener Größe austreten.

Bei Druckköpfen nach dem Stand der Technik ist sowohl die Leistungselektronik als auch die Druckkopflogik außerhalb des Druckkopfes installiert. Die Leistungselektronik dient hierbei zur Erzeugung der zum Betrieb der elektromagnetischen Ventile erforderlichen Spannungen und Ströme, während die Druckkopflogik dazu dient, die Schaltzeitpunkte der einzelnen elektromagnetischen Ventile entsprechend einem vorgegebenen Muster und in Synchronisation mit der Robotersteuerung festzulegen.

In den allermeisten Fällen werden Druckköpfe an einer festen Halterung fixiert und das zu bedruckende (zu beschichtende) Objekt wird am Druckkopf vorbeigeführt. Alternativ dazu ist der Drucckopf an einer Lineareinheit montiert, von der er linear hin und her bewegt wird, während das zu bedruckende Objekt unter dem Druckkopf hindurch geführt wird. Dies resultiert in einfachen Bewegungsabläufen. Wird ein Druckkopf aber an einen 6- oder 7-achsigen Roboter installiert, so sind die Bewegungsabläufe sehr viel komplexer. Dies beeinflusst auch das aus dem gewünschten Druckbild resultierende Muster - zeitliche Abfolge - zur Ansteuerung der Ventilspulen.

Ist im Druckkopf eine Vielzahl (>5, >10, >20, > 50) von elektrischen Spulen verbaut, so muss jede Spule einzeln angesteuert werden, um das gewünschte Druckbild zu erzeugen. Für jede Spule wird mindestens eine, evtl. auch mehrere Adern, sowie evtl. eine gemeinsame Leitung für Masse oder Spannungsversorgung in der Steuerleitung benötigt. Je größer die zu erzeugende Kraft des Aktors ist, desto größer und stärker muss die Spule ausgelegt werden und umso größer muss der Kabelquerschnitt der einzelnen Adern gewählt werden, da der Strombedarf entsprechend hoch ist. Entsprechend der Anzahl der Adern steigt der Gesamtkabelquerschnitt an. Dieses Kabelbündel muss von der Steuerschaltung bzw. der Leistungselektronik zum Druckkopf geführt werden.

Im Fall eines stationären Druckkopfs oder im Fall eines nur wenig beweglichen Druckkopfs (z.B. an Linearachse) und einem bewegtem Objekt treten hier nur wenige nennenswerte Nachteile auf. Wird der Druckkopf hingegen auf einem mehrachsigen Roboter (6-Achs, 7-Achs, n-Achs) installiert, so muss das Kabelbündel von der feststehenden Steuerschaltung durch die Arme des Roboters und insbesondere durch die Handachsen hindurch verlegt werden. Durch die großen Verdrehwinkel der Handachse und die hohen Geschwindigkeiten sowie Beschleunigungen können so enorme Kräfte auf diese Kabel ausgeübt werden. Das erfordert spezielle, für diese Anwendung geeignete Kabel mit hoher Flexibilität. Genau diese Flexibilität ist aber nur bis zu einer begrenzten Anzahl an Adern bzw. zu einem begrenzten Gesamtdurchmesser des Kabels realisierbar. Zudem kann ein größerer Kabelquerschnitt die Bewegung des Roboters einschränken oder behindern. Bei einer Verlegung durch die Handachse steht außerdem nur ein begrenzter Raum zur Verfügung (Querschnitt Handachse), welcher durch andere Leitungen (Beschichtungsmittel, Luft, Lösemittel) belegt sein kann.

Weiterhin ist auch die Kabellänge zwischen Steuerung und elektromagnetischen Ventilen im Druckkopf problematisch. Durch eine größere Leitungslänge werden zusätzliche ohmsche Widerstände, zusätzliche Induktivitäten und zusätzliche elektrische Kapazitäten geschaffen. Dadurch entstehen zum einen Leistungsverluste und zum anderen zeitliche Einflüsse, welche im einfachsten Fall von der Leistungselektronik bzw. der Steuerungslogik ausgeglichen werden müssen, bis hin zum Ausfall der Funktion, wenn eine Korrektur nicht mehr möglich ist. Selbst wenn eine Korrektur erfolgen kann, so muss diese bei der Inbetriebnahme eines Systems individuell für jeden Druckkopf bzw. der Installation zu jedem Ventil vorgenommen werden. Hierbei entsteht einerseits ein hoher Aufwand, um die (Korrektur-)Parameter zu ermitteln, und anderseits das Risiko, dass diese sich über die Betriebsdauer der Anlage verändern (Beispielsweise durch Alterung, Umwelteinflüsse oder Teiletausch).

Werden die Ventile in einer schnell getakteten Betriebsart betrieben, kommt es bei langen Leitungen außerdem zu EMV-Emissionen (EMV: Elektromagnetische Verträglichkeit), welche sowohl nach außen wirken und andere Geräte stören als auch intern andere Kanäle negativ beeinflussen können. Zudem können in die langen Leitungen auch externe Störungen von anderen Quellen in das Druckkopfsystem induziert werden und so zu Fehlern führen.

Zuletzt sind die vielen langen und bewegten Leitungen anfällig für Unterbrechungen, sei es in den Adern selbst, oder an erforderlichen Steck- bzw. Kontaktierungsstellen. Solche Unterbrechungen führen einerseits zu Applikationsstörungen und sind andererseits nur mit hohem Aufwand zu diagnostizieren. Darüber hinaus stellen lange Zuleitungen zu einem Druckkopf mit elektromagnetischen Aktoren ein Sicherheitsrisiko in Bezug auf einen Explosionsschutz dar. Mit großen Strömen durch die Spule kann es bei einer Unterbrechung der Zuleitung aufgrund der Induktivität der Spule zu hohen Spannungsspitzen kommen. Diese können z.B. durch Funkenentladung als Zündquelle fungieren. Durch lange Zuleitungen, die sich in einem Roboter und insbesondere der Roboterhandachse hin- und her bewegen, besteht ein höheres Risiko für einen Kabelbruch.

Zur Steuerung herkömmlicher (Lackier-)Roboter werden Robotersteuerungen verwendet, die eine spezifische Takt- bzw. Zykluszeit (z.B. 8ms, 4ms, 2ms, 1ms) haben. Diese sind in der Lage, Befehle an daran - entweder direkt oder über ein Bussystem - angeschlossene Aktoren zu senden, um das gewünschte Applikationsergebnis zu erzielen. Die dabei erreichbare minimale Auflösung definiert sich durch die Taktzeit und die Bewegungsgeschwindigkeit des Roboters. Diese Taktzeiten reichen in der Regel nicht aus, um die mit dem Druckkopf erwünschten (Applikations-)Genauigkeiten zu erzielen.

Zum Applizieren einer Grafik müssen die einzelnen Ventile in kürzeren Zeitabständen zueinander geschaltet werden können, als die Taktrate der Robotersteuerung dies ermöglicht. Beispielsweise ist bei einer gewünschten Applikationsauflösung von 0,1 mm und einer maximalen Bahngeschwindigkeit des Roboters von 1000mm/s eine Taktzeit von maximal 100µs erforderlich.

Deshalb muss eine eigene Druckkopfsteuerung verwendet werden, die in der Lage ist, die Aktoren um ein Vielfaches schneller anzusteuern als die Robotersteuerung. Diese Druckkopfsteuerung wird von der Robotersteuerung mit Informationen zur Schaltung der Aktoren versorgt und verarbeitet diese dann eigenständig nachdem sie von der Robotersteuerung getriggert wird.

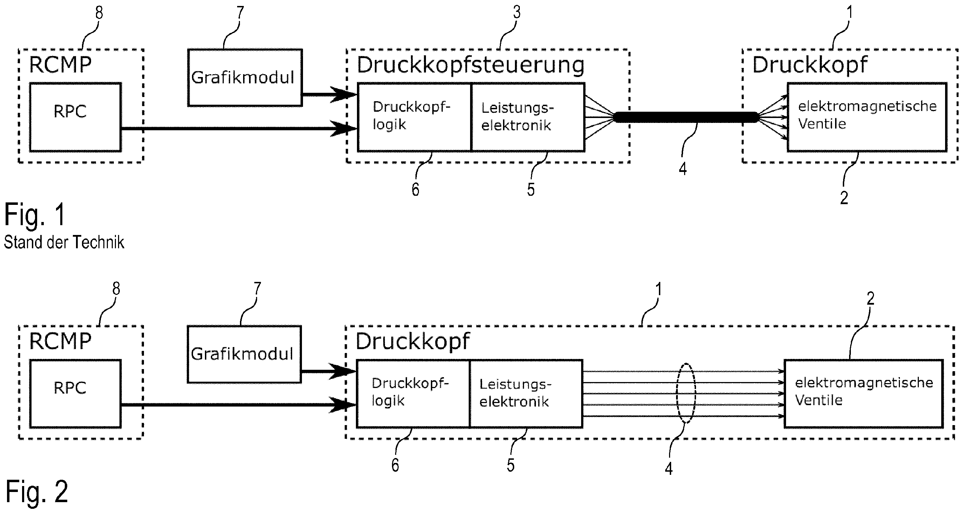

Figur 1 zeigt eine schematische Darstellung einer herkömmlichen Beschichtungsanlage mit einem Druckkopf 1 zur Beschichtung von Bauteilen (z.B. Kraftfahrzeugkarosseriebauteile oder Anbauteile für Kraftfahrzeugkarosseriebauteile). Der Druckkopf 1 enthält hierbei eine Vielzahl von Düsen zur Abgabe jeweils eines eng begrenzten Beschichtungsmittelstrahls, wobei die Beschichtungsmittelabgabe aus den Düsen durch eine Vielzahl von elektromagnetischen Ventilen 2 gesteuert wird.

Die Ansteuerung des Druckkopfs 1 erfolgt durch eine Druckkopfsteuerung 3, die mit dem Drucckopf 1 über ein mehradriges Kabel 4 verbunden ist. Die Anzahl der Adern in dem Kabel 4 hängt hierbei von der Anzahl der elektromagnetischen Ventile 2 in dem Druckkopf 1 ab, was bei einer hohen Anzahl von elektromagnetischen Ventilen 2 zu einer relativ dicken und entsprechend unflexiblen Ausbildung des Kabels 4 führt.

Zum einen enthält die Druckkopfsteuerung 3 eine Leistungselektronik 5, welche die zur Ansteuerung der elektromagnetischen Ventile 2 erforderlichen Spannungen und Ströme bereitstellt.

Zum anderen enthält die Druckkopfsteuerung 3 aber auch eine Druckkopflogik 6, welche die Schaltzeitpunkte für die elektromagnetischen Ventile 2 festlegt und die Leistungselektronik 5 entsprechend ansteuert.

Eingangsseitig ist die Druckkopflogik 6 zum einen mit einem Grafikmodul 7 und zum anderen mit einer Robotersteuerung 8 verbunden. Die in den Zeichnungen dargestellten Abkürzungen RPC bzw. RCMP stehen hierbei für die Begriffe "Robot and Process Control" bzw. "Robot Control Modular Panel".

Das Grafikmodul 7 gibt hierbei eine bestimmte Grafik vor, die von dem Druckkopf 1 auf das Bauteil (z.B. Kraftfahrzeugkarosseriebauteil) aufgebracht werden soll, wobei die von dem Grafikmodul 7 vorgegebene Grafik die Schaltzeitpunkte für die elektromagnetischen Ventile 2 bestimmt. Die Druckkopflogik 6 ermittelt dann in Abhängigkeit von der von dem Grafikmodul 7 vorgegebenen Grafik die Schaltzeitpunkte.

Die Robotersteuerung 8 steuert hierbei den mehrachsigen Beschichtungsroboter an, der den Druckkopf 1 über das zu beschichtende Bauteil (z.B. Kraftfahrzeugkarosseriebauteil) führt. Die entsprechenden Robotersteuerungsdaten werden von der Robotersteuerung 8 an die Druckkopflogik 6 übermittelt. Beispielsweise können diese Robotersteuerungsdaten die Position und Ausrichtung des Druckkopfs 1 enthalten oder es zumindest ermöglichen, dass die Position und Ausrichtung des Druckkopfs 1 aus den Robotersteuerungsdaten abgeleitet wird. Die Druckkopflogik ermittelt die Schaltzeitpunkte für die elektromagnetischen Ventile 2 dann in Abhängigkeit von der von dem Grafikmodul 7 vorgegebenen Grafik unter Berücksichtigung der von der Robotersteuerung 8 gelieferten Robotersteuerungsdaten, was eine Synchronisation mit der Roboterbewegung ermöglicht.

Diese bekannte Anordnung weist jedoch die eingangs ausführlich beschriebenen Nachteile auf. Zum allgemeinen technischen Hintergrund der Erfindung ist auch hinzuweisen auf

US 2002/0030707 A1, DE 10 2012 006 371 A1, EP 1 821 016 A2, WO 2010/046064 A1, WO 2008/151714 A1, WO 2008/131986 A1, EP 3 335 801 A1 und "Applikationshandbuch Leistungshalbleiter", ISBN 978-3-938843-85-7.

Schließlich offenbart EP 3 213 823 A1 einen Applikator gemäß dem Oberbegriff von Anspruch 1. Dieser bekannte Applikator ist jedoch noch nicht optimal.

Der Erfindung liegt deshalb die Aufgabe zugrunde, einen entsprechend verbesserten Druckkopf zu schaffen.

Diese Aufgabe wird durch einen erfindungsgemäßen Druckkopf gemäß dem Hauptanspruch gelöst.

Der erfindungsgemäße Druckkopf eignet sich allgemein zur Applikation eines Beschichtungsmittels. Die Erfindung ist also hinsichtlich des Typs des zu applizierenden Beschichtungsmittels nicht auf ein bestimmtes Beschichtungsmittel beschränkt. Vorzugsweise ist der Druckkopf jedoch zur Applikation eines Lacks ausgelegt. Alternativ besteht im Rahmen der Erfindung die Möglichkeit, dass das Beschichtungsmittel ein Klebstoff ist oder ein Dichtungsmaterial, beispielsweise zur Nahtabdichtung bei Kraftfahrzeugkarosserien. Der erfindungsgemäße Druckkopf kann also auch als Klebstoff-Applikator oder als Dichtungsmaterial-Applikator ausgelegt sein.

Weiterhin ist zu erwähnen, dass der erfindungsgemäße Druckkopf allgemein geeignet ist, um das Beschichtungsmittel (z.B. Lack) auf ein bestimmtes Bauteil zu applizieren. Hinsichtlich des Typs des zu beschichtenden Bauteils ist die Erfindung ebenfalls nicht beschränkt. Vorzugsweise ist der erfindungsgemäße Druckkopf jedoch dazu ausgelegt, ein Beschichtungsmittel (z.B. Lack) auf ein Kraftfahrzeugkarosseriebauteil oder ein Anbauteil eines Kraftfahrzeugkarosseriebauteils zu applizieren.

Der erfindungsgemäße Druckkopf weist zunächst in Übereinstimmung mit dem Stand der Technik mehrere Düsen auf, um das Beschichtungsmittel in Form eines Beschichtungsmittelstrahls zu applizieren. Jede der Düsen gibt hierbei also einen individuell steuerbaren Beschichtungsmittelstrahl aus.

Hierbei ist zu erwähnen, dass der erfindungsgemäße Druckkopf aus den Düsen keinen Sprühkegel des Beschichtungsmittels abgibt, sondern jeweils räumlich begrenzte Strahlen mit nur einer geringen Strahlaufweitung. Der erfindungsgemäße Druckkopf unterscheidet sich also von Zerstäubern (z.B. Rotationszerstäuber, Luftzerstäuber, etc.), die keinen räumlich begrenzten Strahl des Beschichtungsmittels abgeben, sondern einen Sprühkegel des Beschichtungsmittels.

Die einzelnen Beschichtungsmittelstrahlen können hierbei jeweils aus räumlich getrennten Beschichtungsmitteltröpfchen bestehen, so dass der Beschichtungsmittelstrahl auch als Tröpfchenstrahl bezeichnet werden kann. Es besteht jedoch alternativ auch die Möglichkeit, dass die Beschichtungsmittelstrahlen in Strahllängsrichtung zusammenhängend sind.

Darüber hinaus weist der erfindungsgemäße Druckkopf in Übereinstimmung mit dem Stand der Technik mehrere Beschichtungsmittelventile auf, um die Beschichtungsmittelabgabe durch die einzelnen Düsen zu steuern.

Diese Beschichtungsmittelventile können herkömmlicherweise durch mehrere elektrisch ansteuerbare Aktoren (z.B. Magnetaktoren) gesteuert werden, so dass die elektrische Ansteuerung der Aktoren die Beschichtungsmittelabgabe durch die Düsen steuert. Die Erfindung ist jedoch hinsichtlich des technisch-physikalischen Wirkprinzips der Aktoren nicht auf Magnetaktoren beschränkt, sondern auch mit anderen Aktortypen realisierbar, beispielsweise mit piezoelektrischen Aktor, um nur ein Beispiel zu nennen.

Erfindungsgemäß ist eine Steuerschaltung zur elektrischen Ansteuerung der Aktoren in den Druckkopf integriert. Dies ist vorteilhaft, weil dadurch die eingangs beschriebenen Probleme des Standes der Technik vermieden werden.

So ermöglicht die Integration der Steuerschaltung in den Druckkopf eine Verkürzung der Leitungslängen zwischen der Steuerschaltung und den Aktoren, wodurch störende Induktivitäten und Kapazitäten verringert werden.

Darüber hinaus führt die Integration der Steuerschaltung in den Druckkopf aufgrund der Verkürzung der Leitungslängen auch zu einer Verringerung der EMV-Emissionen und zu einer verringerten Anfälligkeit gegenüber EMV-Emissionen von außen.

Weiterhin sind die verkürzten Leitungen zwischen der Steuerschaltung und den Aktoren auch weniger anfällig für Unterbrechungen.

Ferner ermöglichen die verkürzten Leitungen zwischen der Steuerschaltung und den Aktoren eine höhere Taktrate der Beschichtungsmittelventile bzw. kürzere Schaltzeiten.

Durch die Integration der Steuerschaltung in den Druckkopf lässt sich nicht nur die Anzahl der benötigten Adern der Leitung signifikant verringern, sondern auch deren Querschnitt. Wird die Steuerschaltung in herkömmlicher Weise im Schaltschrank eingebaut, so müssen bis zum Druckkopf oftmals Distanzen im Bereich von 10m-50 m überbrückt werden. Die benötigten Ströme für die Ventilspulen im Ampere-Bereich erfordern einen gewissen Querschnitt, um die Leitungsverluste zu minimieren. Dieser Querschnitt muss für jede Spule zur Verfügung gestellt werden. Wird die Leistungselektronik hingegen in den Druckkopf integriert, dann können zum einen die Ströme minimiert werden, indem die Versorgungsspannung für die Leistungselektronik höher gewählt wird (z.B. 48V) als die Nennspannung der Spule (z.B. 12V). Zum anderen kann der Strom noch weiter gesenkt werden, indem die einzelnen Spulen nicht gleichzeitig, sondern leicht versetzt nacheinander angesteuert werden. Dies ist mit der hohen Taktrate der ebenfalls integrierten Steuerlogik realisierbar. Dazu ist es erforderlich, dass die Taktrate nochmals höher ist, als durch die Applikationsauflösung gefordert.

Erfindungsgemäß enthält die integrierte Steuerschaltung auch eine Leistungselektronik zur Ansteuerung der Aktoren. Dies bedeutet, dass die Leistungselektronik die zum Betrieb der Aktoren erforderlichen Spannungen und Ströme bereitstellt.

Die Integration der Leistungselektronik in den Druckkopf ermöglicht kurze Leitungen zwischen der Leistungselektronik und den Aktoren, wobei die Leitungslänge beispielsweise höchstens 300mm, höchstens 200mm, höchstens 100mm oder höchstens 50mm oder sogar höchstens 10mm betragen kann. Im Grenzfall kann die Leistungselektronik auch direkt an den Aktoren angebracht sein.

Weiterhin ist zu erwähnen, dass die Leistungselektronik die Aktoren mit einer elektrischen Spannung ansteuert, die vorzugsweise im Bereich von 6V-96V liegt, insbesondere im Bereich von 12V-48V.

Dabei werden die Aktoren von der Leistungselektronik so angesteuert, dass durch die einzelnen Aktoren ein elektrischer Strom fließt, der vorzugsweise im Bereich von 0,01A-10A liegt, insbesondere im Bereich von 0,25A-5A oder im Bereich von 0,05A-1A.

Dabei steuert die Leistungselektronik die Aktoren vorzugsweise mit einer Pulsweitenmodulation (PWM) mit einem variablen Tastverhältnis an. Die Erfindung ist jedoch hinsichtlich der verwendeten Modulationsart nicht auf eine Pulsweitenmodulation beschränkt, sondern auch mit anderen Modulationsarten realisierbar.

Darüber hinaus umfasst die integrierte Steuerschaltung auch eine Druckkopflogik, wie sie eingangs bereits beschrieben wurde. Die Druckkopflogik ist ausgangsseitig mit der Leistungselektronik verbunden und legt die Schaltzeitpunkte für die einzelnen Beschichtungsmittelventile des Druckkopfs fest. Eingangsseitig ist die Druckkopflogik mit einer Robotersteuerung und entweder direkt oder nur mittelbar mit einem Grafikmodul verbunden.

Die Robotersteuerung steuert hierbei den Beschichtungsroboter, der den Druckkopf programmgesteuert über das Bauteil bewegt, wobei die Robotersteuerung entsprechende Robotersteuerungsdaten an die Druckkopflogik meldet, damit die Druckkopflogik in Abhängigkeit von den Robotersteuerungsdaten die Schaltzeitpunkte für die einzelnen Beschichtungsmittelventile festlegen kann. Beispielsweise können die Robotersteuerungsdaten die Position und die Ausrichtung des Druckkopfs wiedergeben. Es besteht jedoch alternativ auch die Möglichkeit, dass die Druckkopflogik die Position und Ausrichtung des Druckkopfs lediglich aus den Robotersteuerungsdaten ableitet.

Das Grafikmodul definiert dagegen Schaltmuster für die Aktoren entsprechend einer vorgegebenen Grafik, die auf das Bauteil aufgebracht werden soll. Diese Schaltmuster werden dann von dem Grafikmodul an die Druckkopflogik übertragen.

Die Druckkopflogik legt dann in Abhängigkeit von den Robotersteuerungsdaten und/oder in Abhängigkeit von den Schaltmustern des Grafikmoduls die Schaltzeitpunkte fest und steuert die Leistungselektronik entsprechend an.

Die Druckkopflogik steuert also die Öffnungs- und Schließvorgänge der Düsen über die Ansteuerung der Aktoren, die mit Aktornadeln verbunden sind. Die Öffnungs- und Schließvorgänge werden durch ein Programm vorgegeben, das in einer übergeordneten Einheit erzeugt wird. In diesem ist zu jeder Roboter-Position mit Bezug zu der zu lackierenden Fläche der Zustand jedes Ventils (offen oder geschlossen) gespeichert.

Es ist möglich, dass der Druckkopf kontinuierlich Beschichtungsmaterial als Strahlen ausstößt oder, dass er das Beschichtungsmaterial in Form von Tropfen ausstößt. Im letzten Fall öffnet und schließt die Steuerung die Düsen in hoher Frequenz (z.B. mit 10Hz-2000Hz, 100Hz-10000Hz), während der Druckkopf vom Roboter über die zu beschichtende Fläche geführt wird.

Die Druckkopflogik weist deshalb vorzugsweise mindestens eines der folgenden Bauteile bzw. Baugruppen auf:
- Eine Kommunikationsschnittstelle zur Kommunikation mit der Robotersteuerung,
- eine erste Logikeinheit zur logischen Verarbeitung der von dem Grafikmodul gelieferten Schaltmuster,
- eine Synchronisationseinrichtung zur Synchronisation der von dem Grafikmodul gelieferten Schaltmuster mit der Robotersteuerung, und/oder
- eine zweite Logikeinheit zur Kompensation von Toleranzen in der Steuerkette zu den Aktoren, um eine exakte Synchronisation der einzelnen Kanäle für die verschiedenen Aktoren zu erreichen.

Für ein gutes Applikationsergebnis ist es essentiell, dass die Druckkopfsteuerung die Ventile exakt zur Position des Roboters schaltet. Dazu wird die Steuerschaltung zum einen mit dem Takt der Robotersteuerung synchronisiert und zum anderen von dieser getriggert, wenn das vorgegebene Ventilprogramm ausgeführt werden soll.

Da die einzelnen Ventile möglicherweise unterschiedliche Charakteristiken haben (z.B. aufgrund von Fertigungstoleranzen) enthält die Steuerschaltung Mechanismen, um diese durch individuelle Ansteuerung jedes Ventils zu kompensieren. Durch die Integration der Steuerungsschaltung in den Druckkopf ergibt sich eine Einheit, die komplett getestet und parametriert werden kann. Dadurch ist es für den Anwender möglich, den Druckkopf ohne weiteres von einem Roboter zum anderen zu tauschen.

In einer Ausgestaltung der Erfindung sind die Aktoren elektromagnetische Aktoren, die jeweils eine Spule aufweisen. In Abhängigkeit von der Bestromung der Spule wird dann ein Anker in der Spule verschoben, wobei der Anker direkt oder indirekt auf eine Ventilnadel wirkt. Zum Öffnen eines Beschichtungsmittelventils steuert die Leistungselektronik die Spule des betreffenden Aktors dann mit einem relativ hohen Startstrom an. Nach dem Öffnen und zum Offenhalten des betreffenden Beschichtungsmittelventils muss die Leistungselektronik den Aktor dann nur mit einem kleineren Haltestrom ansteuern, der kleiner ist als der Startstrom.

Bei einer Ausgestaltung der Aktoren als elektromagnetische Aktoren mit jeweils einer Spule ist die Spule vorzugsweise mit einem ersten Spulenanschluss unabhängig vom Schaltzustand dauerhaft mit Masse oder mit einer Versorgungsspannung verbunden, während der zweite Spulenanschluss über ein steuerbares Schaltelement mit Masse oder mit einer Versorgungsspannung verbunden ist. Das steuerbare Schaltelement zum Schalten der Spule kann hierbei wahlweise plusseitig ("high side") oder minusseitig ("low side") angeordnet sein. Darüber hinaus kann parallel zu der Spule eine Freilaufdiode geschaltet sein.

In einem anderen Ausführungsbeispiel der Erfindung sind dagegen beide Spulenanschlüsse über jeweils ein steuerbares Schaltelement mit Versorgungsspannung bzw. mit Masse verbunden. Diese Erfindungsvariante mit zwei steuerbaren Schaltelementen zum Schalten der Spule ist aus zwei Gründen vorteilhaft. Zum einen wird die im Magnetfeld der Spule gespeicherte Energie hierbei nicht in der Spule verbraucht, sondern fließt wieder in die Versorgung zurück. Zum anderen geht dieses Umlagern der Energie durch zwei Schaltelemente deutlich schneller als das Verbrauchen in der Spule.

Diesen beiden Vorteilen steht jedoch als Nachteil ein höherer Aufwand bei der Installation entgegen, da für jedes Ventil zwei Adern benötigt werden, während die Schaltung der Spule mit nur einem einzigen Schaltelement mit entsprechend weniger Adern auskommt. Dieser Nachteil tritt jedoch bei der erfindungsgemäßen Integration der Leistungselektronik in den Druckkopf in den Hintergrund, da nur kurze Leitungen zwischen der Leistungselektronik und den Aktoren erforderlich sind.

Bei dieser Erfindungsvariante mit zwei steuerbaren Schaltelementen zum Schalten der Spule können wahlweise zwei Freilaufdioden oder zwei weitere steuerbare Schaltelemente vorgesehen sein.

Ein weiteres Merkmal einfacher Leistungsendstufen ist das einfache Umschalten der Pulsweitenmodulation (PWM) zwischen zwei verschiedenen Tastgraden, um die Spulen zum Öffnen mit einer hohen und zum Halten mit einer niedrigeren Spannung anzusteuern. Der Strom durch die Spule ergibt sich dann aus den daraus resultierenden Spannungen dem Gleichstromwiderstand (RDC) der Spule und den Leitungswiderständen in der Zuleitung. Da der Gleichstromwiderstand (RDC) typischerweise im Bereich weniger Ohm liegt, wird deutlich, dass der Einfluss der Leitungswiderstände nicht mehr zu vernachlässigen ist. Er hat direkten Einfluss auf den in der Spule fließenden Strom und damit auf die Kraft, die der Aktor aufbringen kann. Dieser Einfluss stört umso mehr, je variabler der Leitungswiderstand (z.B. durch unterschiedliche Kabellängen und/oder Querschnitte) ist und lässt sich durch die Integration in den Druckkopf deutlich minimieren. Je näher die Leistungselektronik am Aktor sitzt, desto geringer sind die Einflüsse der Verbindung zwischen beiden Komponenten. Durch die Positionierung der Leistungselektronik im Druckkopf sind die elektrischen Zuleitungen zu den Aktoren kurz (≤300mm, ≤250mm, ≤200mm oder sogar ≤150mm). Außerdem muss diese Verbindung nicht mehr die Bewegungen des Roboters mitmachen, sondern kann fest verlegt sein.

Hinzu kommen Varianzen die sich aufgrund von Temperatureinflüssen (insbesondere beim Spulenwiderstand) ergeben. Diese werden bei einfachen Steuerungen zusammen mit den Leitungsverlusten so kompensiert, dass die Spulen mit einer höheren Spannung betrieben werden als eigentlich nötig, um genügend Funktionsreserve zu haben. Das hat zur Folge, dass in den Spulen meist mehr Strom fließt als eigentlich notwendig, was wiederum zu einer höheren Wärmeentwicklung führt und das System insgesamt weniger effizient macht. Es ist deshalb wesentlich besser, den Strom in den Spulen zu regeln, anstatt die Spule mit unterschiedlichen Spannungen zu betreiben. Die Stabilität der Regelung profitiert ebenfalls von der Integration in den Druckkopf, da äußere Einflüsse auf ein Minimum reduziert werden.

Ferner ist zu erwähnen, dass die Steuerschaltung im Gehäuse des Druckkopfs oder in einem Anschlussflansch des Druckkopfs integriert sein kann.

In dem bevorzugten Ausführungsbeispiel der Erfindung ist der Druckkopf explosionsgeschützt, insbesondere gemäß DIN EN 60079-2. Dies kann beispielsweise durch eine Druckgasspülung des Gehäuses des Druckkopfs erreicht werden. Um den Druckkopf gemäß den geltenden Vorschriften explosionsschutzsicher zu gestalten, kann das gesamte Gehäuse mit einem inerten Gas (z.B. Druckluft) gespült werden, sodass sich ein geringer Innendruck (<1bar) aufbaut. Dabei misst ein Sensor ständig den Innendruck. Die Grenzwerte (Mindestdruck und Maximaldruck) des Innendrucks sind Teil des Sicherheitskonzepts und sind in der übergeordneten Steuerung hinterlegt. Das in das Gehäuse eingeleitete Gas entweicht über eine Bohrung (eine Drossel, ein Ventil, ein Rückschlagventil) im Gehäuse oder in einem am Gehäuse angrenzenden Bauteil in die Umgebung des Druckkopfs oder in andere drucklose Bereiche z.B. über die Handachse in den Roboterarm. In einer besonderen Ausführung wird das Gas so in das Gehäuse eingeleitet, dass es die Aktoren und/oder die Elektronikbauteile kühlt. Die elektrischen Komponenten (z.B. Platinen, Bauteile) können zum Erreichen des Explosionsschutzziels aber auch mit einem selbstvernetzenden Polymer überzogen werden.

Darüber hinaus ist zu erwähnen, dass die Erfindung nicht nur Schutz beansprucht für den vorstehend beschriebenen erfindungsgemäßen Druckkopf als einzelnes Bauteil. Vielmehr beansprucht die Erfindung auch Schutz für einen Beschichtungsroboter (z.B. Lackierroboter) mit einem solchen Druckkopf.

Schließlich beansprucht die Erfindung auch Schutz für eine komplette Beschichtungsanlage (z.B. Lackieranlage) mit dem erfindungsgemäßen Beschichtungsroboter mit dem daran montierten Druckkopf.

Die Verkabelung zwischen der Robotersteuerung und der Druckkopfsteuerung kann hierbei auf ein Minimum reduziert werden. Dabei kann das Kabel eine Leistungsspannungsversorgung für die Aktoren umfassen, insbesondere mit einer Spannung von 48 VDC bei einer Leistung von 0,1kW, 0,5kW oder mehr als 1kW. Darüber hinaus kann das Kabel eine Steuerspannungsversorgung für die Druckkopflogik und/oder für die Leistungselektronik aufweisen, insbesondere mit einer Spannung von 24 VDC. Ferner kann das Kabel auch einen Potentialausgleich aufweisen und/oder eine Kommunikationsverbindung (z.B. Ethernet-Verbindung) zur Anbindung an die Robotersteuerung.

Weiterhin besteht im Rahmen der Erfindung die Möglichkeit, dass das Kabel ein Hybridkabel ist, bei dem alle Adern des Kabels unter einem gemeinsamen Schutzmantel liegen und/oder sich mehrere Funktionen eine gemeinsame Ader des Kabels teilen, insbesondere eine gemeinsame Masseleitung.

Schließlich ist zu erwähnen, dass die Anschlüsse an dem Druckkopf für die Robotersteuerung, das Grafikmodul und/oder die Druckkopflogik lösbar sein sollten, insbesondere steckbar. Hierbei können die Anschlüsse an dem Druckkopf beispielsweise in einem Gehäuse, in einem Anschlussflansch, außen an dem Gehäuse oder außen an dem Anschlussflansch des Druckkopfs angebracht sein.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematische Darstellung einer herkömmlichen Lackieranlage mit einem Drucckopf,
- Figur 2: eine schematische Darstellung einer erfindungsgemäßen Lackieranlage, wobei in den Druckkopf eine Druckkopflogik und eine Leistungselektronik integriert sind,
- Figur 3: eine nicht erfindungsgemäße Abwandlung von Figur 2, wobei in den Druckkopf nur die Leistungselektronik integriert ist,
- Figur 4: eine Abwandlung von Figur 2, wobei ein Grafikmodul der Robotersteuerung vorgestaltet ist,
- Figur 5: ein schematisches Schaltbild zur Verdeutlichung der Ansteuerung einer Spule eines elektromagnetischen Ventils durch ein einziges Schaltelement,
- Figur 6: eine Abwandlung von Figur 5 mit zwei Schaltelementen zur Ansteuerung der Spule,
- Figur 7: eine Abwandlung von Figur 6 mit zwei zusätzlichen Schaltelementen anstelle der Freilaufdioden bei Figur 6,
- Figur 8: ein Diagramm zur Verdeutlichung der pulsweitenmodulierten Spannungen bei zwei verschiedenen Schaltmustern, sowie
- Figur 9: den Stromverlauf beim Schalten einer Spule.

Figur 2 zeigt eine schematische Darstellung einer erfindungsgemäßen Lackieranlage, die beispielsweise zur Lackierung von Kraftfahrzeugkarosseriebauteilen verwendet werden kann. Dieses erfindungsgemäße Ausführungsbeispiel stimmt teilweise mit der vorstehend beschriebenen und in Figur 1 gezeigten Darstellung überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Druckkopflogik 6 und die Leistungselektronik 5 in den Druckkopf 1 integriert sind.

Zum einen bietet dies den Vorteil, dass die Leitungen 4 zwischen der Leistungselektronik 5 und den elektromagnetischen Ventilen 2 weniger anfällig sind für Unterbrechungen.

Zum anderen sind die Leitungen zwischen der Leistungselektronik 5 und den elektromagnetischen Ventilen 2 auch weniger anfällig für störende EMV-Emissionen von außen.

Weiterhin ist als Vorteil zu nennen, dass die Leitungen zwischen der Leistungselektronik 5 und den elektromagnetischen Ventilen 2 kürzer sind, so dass geringere Leistungsverluste in den Leitungen entstehen und auch zeitliche Einflüsse weniger stark sind.

Ganz allgemein werden durch die Verkürzung der Leitungen weniger zusätzliche ohmsche Widerstände, Induktivitäten und Kapazitäten geschaffen.

Darüber hinaus unterliegen die Leitungen zwischen der Leistungselektronik 5 und den elektromagnetischen Ventilen 2 aufgrund der Integration der Leistungselektronik in den Druckkopf 1 auch keinerlei mechanischen Verformungen, wie es beim Stand der Technik der Fall ist.

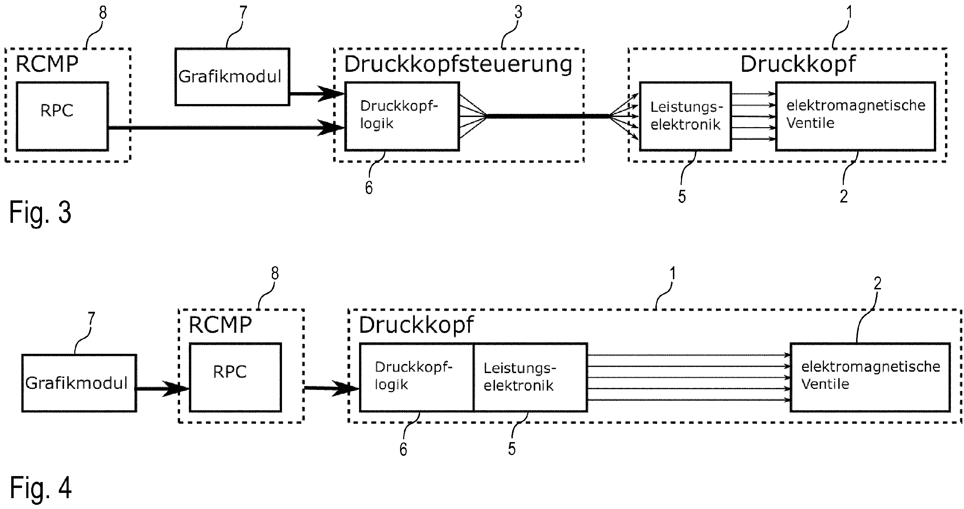

Figur 3 zeigt eine nicht erfindungsgemäße Abwandlung des Ausführungsbeispiels gemäß Figur 2, so dass zur Vermeidung von Wiederholungen auf die vorstehende Beschreibung verwiesen wird, wobei für entsprechende Einzelheiten dieselben Bezugszeichen verwendet werden.

Eine Besonderheit dieser Abwandlung besteht darin, dass nur die Leistungselektronik 5 in den Druckkopf 1 integriert ist, wohingegen die Druckkopflogik 6 außerhalb des Druckkopfs 1 in einer Druckkopfsteuerung 3 angeordnet ist.

Das Ausführungsbeispiel gemäß Figur 4 stimmt wiederum weitgehend mit den vorstehend beschriebenen Ausführungsbeispielen überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Druckkopflogik 6 nicht - wie bei den Figuren 1-3 - direkt mit dem Grafikmodul 7 verbunden ist. Vielmehr ist zwischen der Druckkopflogik 6 und dem Grafikmodul 7 hierbei die Robotersteuerung 8 angeordnet. Die Druckkopflogik 6 ist hierbei also nur mittelbar mit dem Grafikmodul 7 verbunden.

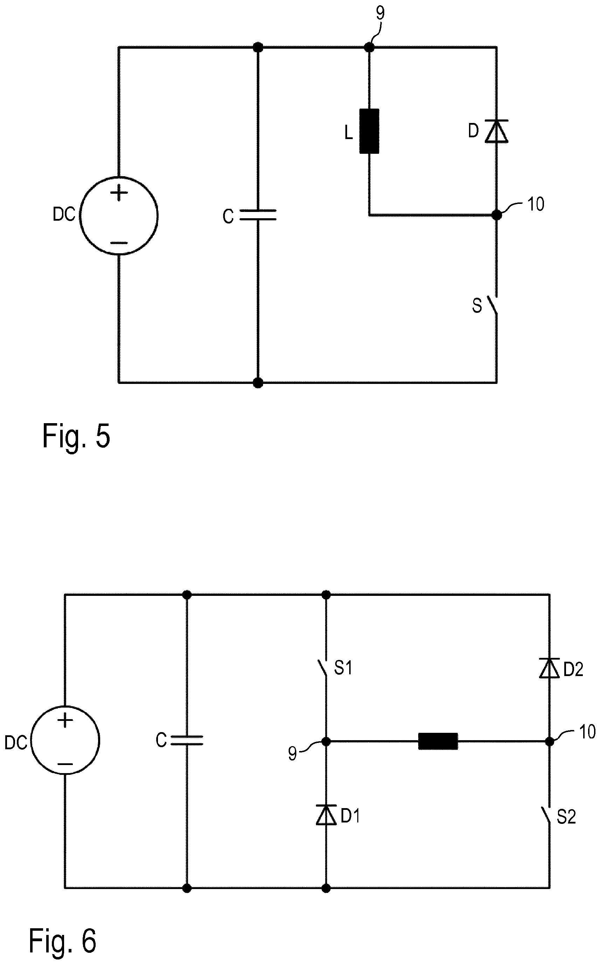

Figur 5 zeigt ein vereinfachtes Schaltbild zur Ansteuerung einer Spule L in den elektromagnetischen Ventilen 2. Hierbei ist ein erster Spulenanschluss 9 der Spule L direkt mit einer Versorgungsspannung DC verbunden. Ein zweiter Spulenanschluss 10 ist dagegen über ein steuerbares Schaltelement S mit Masse verbunden.

Parallel zu der Spule L ist hierbei noch eine Freilaufdiode D geschaltet.

Darüber hinaus ist parallel zu der Versorgungsspannung DC ein Kondensator C geschaltet.

Die vorstehend beschriebene Gestaltung der Leistungsendstufe ist vergleichsweise einfach, jedoch hat diese Bauweise den Nachteil, dass die Schließzeiten der elektromagnetischen Ventile 2 verlängert werden. Im geschlossenen Zustand des steuerbaren Schaltelements S wird Energie eingespeist und im Magnetfeld der Spule L gespeichert. Wird nun das steuerbare Schaltelement S geöffnet, so fließt der Strom über die Freilaufdiode D aufgrund der gespeicherten Energie so lange weiter, bis das Magnetfeld komplett abgebaut ist. Dies ist insbesondere beim Drucken mit Tropfen unerwünscht.

Figur 6 zeigt deshalb eine alternativ mögliche Bauweise einer Leistungsendstufe, die wiederum teilweise mit der vorstehend beschriebenen einfachen Bauweise übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieser Bauweise besteht darin, dass der erste Spulenanschluss 9 über ein erstes steuerbares Schaltelement S1 mit der Versorgungsspannung DC verbunden ist, während der zweite Spulenanschluss C über ein zweites steuerbares Schaltelement S2 mit Masse verbunden ist.

Darüber hinaus ist der erste Spulenanschluss 9 über eine erste Freilaufdiode D1 mit Masse verbunden, während der zweite Spulenanschluss C über eine zweite Freilaufdiode D2 mit der Versorgungsspannung DC verbunden ist.

Diese Bauweise der Leistungsendstufe hat zwei Vorteile. Zum einen wird die im Magnetfeld der spule L gespeicherte Energie nicht in der Spule L verbraucht, sondern fließt wieder in die Versorgung bzw. den Speicherkondensator C zurück. Zum anderen geht dieses Umlagern der Energie aus der Spule L deutlich schneller als das Verbrauchen.

Diesen beiden Vorteilen steht jedoch der Nachteil eines höheren Installationsaufwandes entgegen, da für jedes der Ventile 2 zur Ansteuerung der beiden Schaltelemente S1, S2 zwei Adern erforderlich sind, während die einfache Lösung gemäß Figur 5 jeweils nur mit einer einzigen Ader zum Ansteuern des Schaltelements S auskommt. Dieser Nachteil tritt jedoch aufgrund der erfindungsgemäßen Integration der Leistungselektronik 5 in den Druckkopf 1 in den Hintergrund.

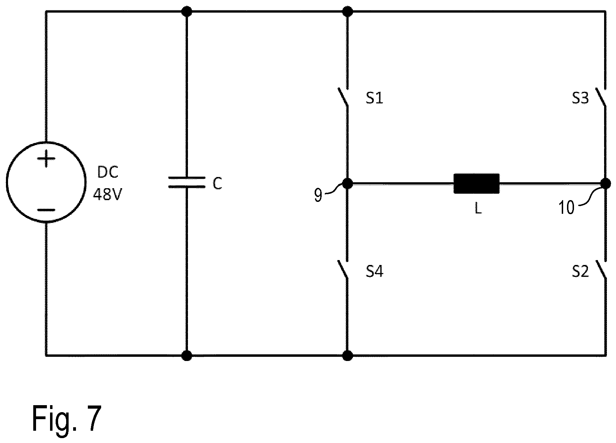

Figur 7 zeigt eine Abwandlung des Ausführungsbeispiels gemäß Figur 6, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die beiden Freilaufdioden D1, D2 durch zwei steuerbare Schaltelemente S3, S4 ersetzt wurden.

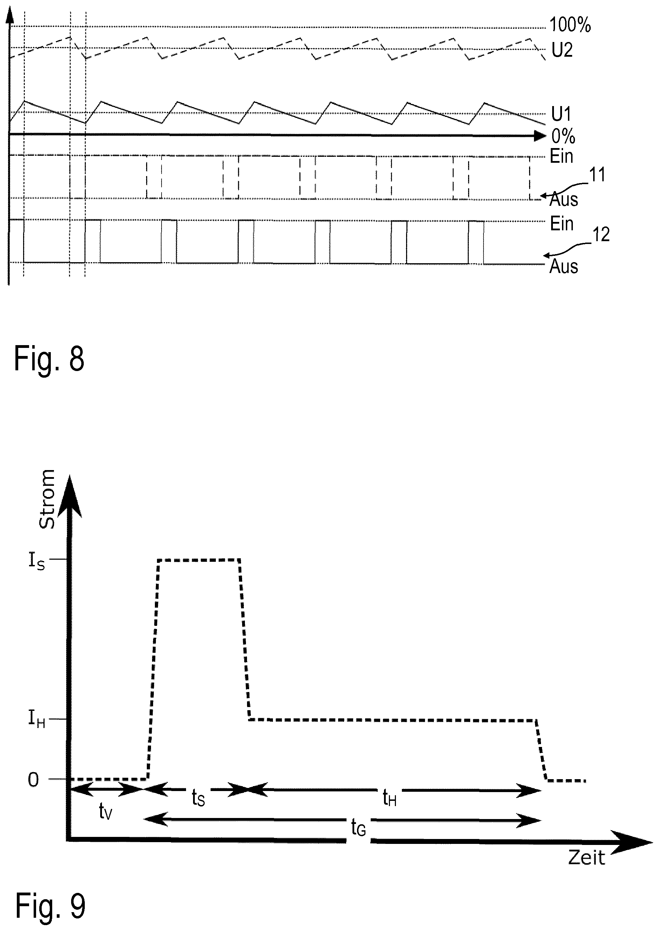

Figur 8 zeigt ein Diagramm zur Verdeutlichung von zwei verschiedenen Spannungen U1, U2 bei der Pulsweitenmodulation durch zwei verschiedene Schaltmuster 11, 12. Das Schaltmuster 11 erzeugt hierbei die relativ hohe Spannung U2, während das Schaltmuster 12 die kleinere Spannung U1 erzeugt.

Schließlich zeigt Figur 9 den Stromverlauf beim Ansteuern eines der elektromagnetischen Ventile 2. Nach einem Startversatz tᵥ steigt der Strom I zunächst auf einen Startstrom I_{S} an und wird dann für eine Startdauer t_{S} auf diesem Wert gehalten. Anschließt fällt der Strom dann auf einen kleineren Haltestrom I_{H} ab und wird auf diesem niedrigeren Wert für eine bestimmte Haltedauer t_{H} gehalten.

### Bezugszeichenliste:

- 1: Druckkopf
- 2: Elektromagnetische Ventile
- 3: Druckkopfsteuerung
- 4: Kabel zwischen Druckkopfsteuerung und Druckkopf
- 5: Leistungselektronik
- 6: Druckkopflogik
- 7: Grafikmodul
- 8: Robotersteuerung
- 9: Erster Spulenanschluss
- 10: Zweiter Spulenanschluss
- 11, 12: Schaltmuster
- C: Kondensator
- D, D1, D2: Freilaufdioden
- DC: Versorgungsspannung
- L: Spule des elektromagnetischen Ventils
- S: Steuerbares Schaltelement
- S1-S4: steuerbare Schaltelemente
- U1, U2: Spannungen der beiden Schaltmuster 11, 12

## Patentansprüche

1. Druckkopf (1) zur Applikation eines Beschichtungsmittels, insbesondere eines Lacks, eines Klebstoffs oder eines Dichtungsmaterials, auf ein Bauteil, insbesondere auf ein Kraftfahrzeugkarosseriebauteil oder ein Anbauteil für ein Kraftfahrzeugkarosseriebauteil, mit
a) mehreren Düsen zur Applikation des Beschichtungsmittels in Form eines Beschichtungsmittelstrahls,
b) mehreren Beschichtungsmittelventilen (2) zur Steuerung der Beschichtungsmittelabgabe durch die einzelnen Düsen, und
c) mehreren elektrisch ansteuerbaren Aktoren (L) zum Steuern der Beschichtungsmittelventile (2),
d) einer Steuerschaltung (5, 6) zur elektrischen Ansteuerung der Aktoren (L),
d1) wobei die Steuerschaltung (5, 6) in den Druckkopf (1) integriert ist,
d2) wobei die Steuerschaltung eine Leistungselektronik (5) zur Ansteuerung der Aktoren (L) enthält,
**dadurch gekennzeichnet,**
e) dass die integrierte Steuerschaltung (5, 6) auch eine Druckkopflogik (6) umfasst,
f) dass die Druckkopflogik (6) ausgangsseitig mit der Leistungselektronik (5) verbunden ist,
g) dass die Druckkopflogik (6) eingangsseitig mit einer Robotersteuerung (8) und entweder direkt oder nur mittelbar mit einem Grafikmodul (7) verbunden ist,
h) dass die Robotersteuerung (8) einen Beschichtungsroboter steuert, der den Druckkopf (1) programmgesteuert über das Bauteil bewegt, wobei die Robotersteuerung (8) Robotersteuerungsdaten an die Druckkopflogik (6) meldet,
i) dass das Grafikmodul (7) Schaltmuster für die Aktoren (L) entsprechend einer vorgegebenen Grafik vorgibt und an die Druckkopflogik (6) meldet, und
j) dass die Druckkopflogik (6) in Abhängigkeit von den Robotersteuerungsdaten und in Abhängigkeit von den Schaltmustern die Leistungselektronik (5) ansteuert.

2. Druckkopf (1) nach Anspruch 1, **dadurch gekennzeichnet,**
a) **dass** die Leistungselektronik (5) über kurze Leitungen (4) mit einer Leitungslänge von höchstens 300mm, 200mm, 100mm, 50mm oder höchstens 10mm mit den Aktoren (L) verbunden ist, und/oder
b) **dass** die Leistungselektronik (5) die Aktoren (L) mit einer elektrischen Spannung ansteuert, die im Bereich von 6V-96V liegt, insbesondere im Bereich von 12V-48V, und/oder
c) **dass** die Leistungselektronik (5) die einzelnen Aktoren (L) so ansteuert, dass durch die einzelnen Aktoren (L) ein elektrischer Strom fließt, der im Bereich von 0,01A-10A liegt, insbesondere im Bereich von 0,2A-5A oder 0,05A-1A, und/oder
d) **dass** die Leistungselektronik (5) die Aktoren (L) mit einer Pulsweitenmodulation mit einem variablen Tastverhältnis oder einer Frequenzmodulation oder einer sonstigen Modulation ansteuert.

3. Druckkopf (1) nach einem der vorhergehenden Ansprüche, **dadurch gekennzeichnet, dass** die Druckkopflogik (6) folgendes aufweist:
a) eine Kommunikationsschnittstelle zur Kommunikation mit der Robotersteuerung (8),
b) eine erste Logikeinheit zur logischen Verarbeitung der von dem Grafikmodul (7) gelieferten Schaltmuster,
c) eine Synchronisationseinrichtung zur Synchronisation der von dem Grafikmodul (7) gelieferten Schaltmuster mit der Robotersteuerung (8), und/oder
d) eine zweite Logikeinheit zur Kompensation von Toleranzen in der Steuerkette zu den Aktoren (L), um eine exakte Synchronisation der einzelnen Kanäle für die verschiedenen Aktoren (L) zu erreichen.

4. Druckkopf (1) nach einem der vorhergehenden Ansprüche, **dadurch gekennzeichnet,**
a) **dass** die Aktoren (L) elektromagnetische Aktoren (L) sind, die jeweils eine Spule (L) aufweisen,
b) **dass** die Leistungselektronik (5) die Spule (L) eines der Aktoren (L) zum Öffnen des zugehörigen Beschichtungsmittelventils mit einem Startstrom (I_{S}) ansteuert, und
c) **dass** die Leistungselektronik (5) die Spule (L) eines der Aktoren (L) zum Offenhalten des zuvor bereits geöffneten zugehörigen Beschichtungsmittelventils mit einem Haltestrom (I_{H}) ansteuert, wobei der Haltestrom (I_{H}) kleiner ist als der Startstrom (Iₛ).

5. Druckkopf (1) nach einem der vorhergehenden Ansprüche, **dadurch gekennzeichnet,**
a) **dass** die Aktoren (L) elektromagnetische Aktoren (L) sind, die jeweils eine Spule (L) aufweisen,
b) **dass** die Spule (L) mit einem ersten Spulenanschluss (9) unabhängig vom Schaltzustand dauerhaft mit Masse oder mit einer Versorgungsspannung (DC) verbunden ist,
c) **dass** die Spule (L) mit einem zweiten Spulenanschluss (10) über ein steuerbares Schaltelement (S) mit Masse oder mit einer Versorgungsspannung (DC) verbunden ist, und/oder
d) **dass** parallel zu der Spule (L) eine Freilaufdiode (D) geschaltet ist.

6. Druckkopf (1) nach einem der Ansprüche 1 bis 4, **dadurch gekennzeichnet,**
a) **dass** die Aktoren (L) elektromagnetische Aktoren (L) sind, die jeweils eine Spule (L) aufweisen,
b) **dass** die Spule (L) mit einem ersten Spulenanschluss (9) über ein erstes steuerbares Schaltelement (S1) mit einer Versorgungsspannung (DC) verbunden ist, und
c) **dass** die Spule (L) mit einem zweiten Spulenanschluss (10) über ein zweites steuerbares Schaltelement (S2) mit Masse verbunden ist.

7. Druckkopf (1) nach Anspruch 6, **dadurch gekennzeichnet,**
a) **dass** die Spule (L) mit dem zweiten Spulenanschluss (10) über eine zweite Freilaufdiode (D2) oder über ein drittes steuerbares Schaltelement (S4) mit der Versorgungsspannung (DC) verbunden ist, und/oder
b) **dass** die Spule (L) mit dem ersten Spulenanschluss (9) über eine erste Freilaufdiode (D1) oder ein viertes steuerbares Schaltelement (S3) mit Masse verbunden ist, und/oder

8. Druckkopf (1) nach einem der vorhergehenden Ansprüche, **dadurch gekennzeichnet,**
a) **dass** die Steuerschaltung (5, 6) im Gehäuse des Druckkopfs (1) integriert ist, und/oder
b) **dass** die Steuerschaltung (5, 6) im Anschlussflansch des Druckkopfs (1) integriert ist.

9. Druckkopf (1) nach einem der vorhergehenden Ansprüche, **dadurch gekennzeichnet, dass** der Druckkopf (1) explosionsgeschützt ist, insbesondere gemäß DIN EN 60079-2, insbesondere mit einer Druckgasspülung eines Gehäuses des Druckkopfs (1),

10. Beschichtungsroboter, insbesondere Lackierroboter, mit einem Druckkopf (1) nach einem der vorhergehenden Ansprüche.

11. Beschichtungsanlage zur Applikation des Beschichtungsmittels, insbesondere des Lacks, auf das Bauteil, insbesondere auf das Kraftfahrzeugkarosseriebauteil oder das Anbauteil für ein Kraftfahrzeugkarosseriebauteil, mit
a) dem Beschichtungsroboter nach Anspruch 10,
b) der Robotersteuerung (8) zur Programmsteuerung des Beschichtungsroboters, und
c) dem Grafikmodul (7) zur Vorgabe von Schaltmustern für die Aktoren (L) entsprechend einer vorgegebenen Grafik.

12. Beschichtungsanlage nach Anspruch 11, **gekennzeichnet durch** mindestens ein Kabel zwischen der Robotersteuerung (8) und der Druckkopflogik (6), wobei das Kabel folgende Anschlüsse umfasst:
a) eine Leistungsspannungsversorgung für die Aktoren (L), insbesondere mit einer Spannung von 48 VDC bei einer Leistung größer 0.1 kW, größer 0.5 kW oder größer 1kW,
b) eine Steuerspannungsversorgung für die Druckkopflogik (6) und/oder die Leistungselektronik (5), insbesondere mit einer Spannung von 24 VDC,
c) einen Potentialausgleich, und
d) eine Kommunikationsverbindung zur Anbindung an die Robotersteuerung (8), insbesondere eine Ethernet-Verbindung.

13. Beschichtungsanlage nach Anspruch 12, **dadurch gekennzeichnet, dass** das Kabel ein Hybridkabel ist, bei dem
a) alle Adern des Kabels unter einem gemeinsamen Schutzmantel liegen, und/oder
b) sich mehrere Funktionen eine gemeinsame Ader des Kabels teilen, insbesondere eine gemeinsame Masseleitung.

14. Beschichtungsanlage nach einem der Ansprüche 11 bis 13, **dadurch gekennzeichnet,**
a) **dass** die Anschlüsse an dem Druckkopf (1) für die Robotersteuerung (8), das Grafikmodul (7) und/oder die Druckkopflogik (6) lösbar sind, insbesondere steckbar, und/oder
b) **dass** die Anschlüsse an dem Druckkopf (1) wie folgt angeordnet sind:
b1) in einem Gehäuse des Druckkopfs (1),
b2) in einem Anschlussflansch des Druckkopfs (1),
b3) außen an dem Gehäuse des Druckkopfs (1), oder
b4) außen an dem Anschlussflansch des Druckkopfs (1).

## Claims

1. Printhead (1) for applying a coating agent, in particular a paint, an adhesive or a sealing material, to a component, in particular to a motor vehicle body component or an add-on part for a motor vehicle body component, having
a) several nozzles for the application of the coating agent in the form of a coating agent jet,
b) several coating agent valves (2) for controlling the release of the coating agent through the individual nozzles, and
c) several electrically controllable actuators (L) for controlling the coating agent valves (2),
d) a control circuit (5, 6) for electrically driving the actuators (L),
d1) wherein the control circuit (5, 6) is integrated in the printhead (1),
d2) wherein the control circuit (5, 6) contains power electronics (5) for driving the actuators (L),
**characterized in**
e) that the integrated control circuit (5, 6) also comprises a printhead logic (6),
f) that the printhead logic (6) is connected on the output side to the power electronics (5),
g) that the printhead logic (6) is connected on the input side to a robot controller (8) and either directly or only indirectly to a graphics module (7),
h) that the robot controller (8) controls a coating robot which moves the printhead (1) in a program-controlled manner over the component, the robot controller (8) reporting robot control data to the printhead logic (6),
i) that the graphics module (7) specifies switching patterns for the actuators (L) in accordance with a predefined graphic and reports them to the printhead logic (6), and
j) that the printhead logic (6) controls the power electronics (5) as a function of the robot control data and as a function of the switching patterns.

2. Printhead (1) according to claim 1, **characterized in**
a) **that** the power electronics (5) are connected to the actuators (L) via short lines (4) with a line length of at most 300 mm, 200 mm, 100 mm, 50 mm or at most 10 mm, and/or
b) **that** the power electronics (5) drive the actuators (L) with an electrical voltage which is in the range from 6V-96V, in particular in the range from 12V-48V, and/or
c) **that** the power electronics (5) actuate the individual actuators (L) in such a way that an electric current flows through the individual actuators (L) which is in the range from 0.01A-10A, in particular in the range from 0.2A-5A or 0.05A-1A, and/or
d) **that** the power electronics (5) drive the actuators (L) with a pulse width modulation with a variable duty cycle or a frequency modulation or another modulation.

3. Printhead (1) according to any of the preceding claims, **characterized in that** the printhead logic (6) comprises the following:
a) a communication interface for communication with the robot controller (8),
b) a first logic unit for logically processing the switching patterns supplied by the graphics module (7),
c) a synchronisation device for synchronising the switching patterns supplied by the graphics module (7) with the robot controller (8), and/or
d) a second logic unit for compensating tolerances in the control chain to the actuators (L) in order to achieve exact synchronization of the individual channels for the various actuators (L).

4. Printhead (1) according to any of the preceding claims, **characterized in**
a) **that** the actuators (L) are electromagnetic actuators (L) which each have a coil (L),
b) **that** the power electronics (5) drive the coil (L) of one of the actuators (L) for opening the associated coating agent valve with a starting current (Is), and
c) **that** the power electronics (5) drive the coil (L) of one of the actuators (L) with a holding current (I_{H}) in order to keep the associated coating agent valve, which has already been opened previously, open, the holding current (I_{H}) being smaller than the starting current (Is).

5. Printhead (1) according to one of the preceding claims, **characterized in**
a) **that** the actuators (L) are electromagnetic actuators (L) which each have a coil (L),
b) **that** with a first coil connection (9), the coil (L) is permanently connected to ground or to a supply voltage (DC) irrespective of the switching state,
c) **that** with a second coil connection (10), the coil (L) is connected via a controllable switching element (S) to ground or to a supply voltage (DC), and/or
d) **that** a free-wheeling diode (D) is connected in parallel with the coil (L).

6. Printhead (1) according to one of the claims 1 to 4, **characterized in**
a) **that** the actuators (L) are electromagnetic actuators (L) which each have a coil (L),
b) **that** with a first coil connection (9), the coil (L) is connected via a first controllable switching element (S1) with a supply voltage (DC), and
c) **that** with a second coil connection (10), the coil (L) is connected to ground via a second controllable switching element (S2).

7. Printhead (1) according to claim 6, **characterized in**
a) **that** with the second coil connection (10), the coil (L) is connected to the supply voltage (DC) via a second free-wheeling diode (D2) or via a third controllable switching element (S4), and/or
b) **that** with the first coil connection (9), the coil (L) is connected to ground via a first free-wheeling diode (D1) or a fourth controllable switching element (S3), and/or

8. Printhead (1) according to one of the preceding claims, **characterized in**
a) **that** the control circuit (5, 6) is integrated in the housing of the printhead (1), and/or
b) **that** the control circuit (5, 6) is integrated in the connecting flange of the printhead (1).

9. Printhead (1) in accordance with one of the preceding claims, **characterized in that** the printhead (1) is explosion-proof, in particular in accordance with DIN EN 60079-2, in particular with a compressed gas purge of a housing of the printhead (1).

10. Coating robot, in particular painting robot, with a printhead (1) according to one of the preceding claims.

11. Coating installation for applying the coating agent, in particular the paint, to the component, in particular to the motor vehicle body component or to the add-on part for a motor vehicle body component, having
a) the coating robot according to claim 10,
b) the robot controller (8) for program control of the coating robot, and
c) the graphics module (7) for specifying switching patterns for the actuators (L) in accordance with a predefined graphic.

12. Coating installation according to claim 11, **characterized by** at least one cable between the robot controller (8) and the printhead logic (6), the cable comprising the following connections:
a) a power voltage supply for the actuators (L), in particular with a voltage of 48 VDC at a power greater than 0.1 kW, greater than 0.5 kW or greater than 1 kW,
b) a control voltage supply for the printhead logic (6) and/or the power electronics (5), in particular with a voltage of 24 VDC,
c) potential equalization; and
d) a communication connection for connection to the robot controller (8), in particular an Ethernet connection.

13. Coating installation according to claim 12, **characterized in that** the cable is a hybrid cable in which
a) all the wires of the cable are under a common protective sheath; and/or
b) several functions share a common cable wire, in particular a common earth conductor.

14. Coating installation in accordance with any of claims 11 to 13, **characterized in that**
a) the connections on the printhead (1) for the robot controller (8), the graphics module (7) and/or the printhead logic (6) are detachable, in particular pluggable, and/or
b) the connections on the printhead (1) are arranged as follows:
b1) in a housing of the printhead (1),
b2) in a connecting flange of the printhead (1),
b3) on the outside of the housing of the printhead (1), or
b4) on the outside of the connecting flange of the printhead (1).

## Revendications

1. Tête d'impression (1) pour l'application d'un produit de revêtement, plus particulièrement d'une peinture, d'un adhésif ou d'un matériau d'étanchéité, sur un composant, plus particulièrement sur un composant de carrosserie de véhicule automobile ou sur une pièce rapportée pour un composant de carrosserie de véhicule automobile, avec
a) plusieurs buses pour l'application du produit de revêtement sous la forme d'un jet de produit de revêtement,
b) plusieurs soupapes de produit de revêtement (2) pour le contrôle de la distribution du produit de revêtement par les différentes buses et
c) plusieurs actionneurs (L) contrôlables électriquement pour le contrôle des soupapes de produit de revêtement (2),
d) un circuit de commande (5, 6) pour le contrôle électrique des actionneurs (L)
d1)dans lequel le circuit de commande (5, 6) est intégré dans la tête d'impression (1),
d2)dans lequel le circuit de commande comprend une électronique de puissance (5) pour le contrôle des actionneurs (L),
**caractérisée en ce que**
e) le circuit de commande intégré (5, 6) comprend également une logique de tête d'impression (6),
f) la logique de tête d'impression (6) est reliée, côté sortie, avec l'électronique de puissance (5),
g) la logique de tête d'impression (6) est reliée, côté entrée, avec une commande robotique (8) et est reliée soit directement soit seulement indirectement avec un module graphique (7),
h) la commande robotique (8) contrôle un robot de revêtement qui déplace la tête d'impression (1) de manière programmée au-dessus du composant, dans lequel la commande robotique (8) envoie des données de commande robotique à la logique de tête d'impression (6),
i) le module graphique (7) prescrit des modèles de commutation pour les actionneurs (L) en fonction d'un graphisme prédéterminé et les envoie à la logique de tête d'impression (6) et
j) la logique de tête d'impression (6) contrôle l'électronique de puissance (5) en fonction des données de la commande robotique et en fonction des modèles de commutation.

2. Tête d'impression (1) selon la revendication 1, **caractérisée en ce que**
a) l'électronique de puissance (5) est reliée, par l'intermédiaire de lignes courtes (4), avec une longueur de lignes de 300 mm, 100 mm, 50 mm ou 10 mm maximum, avec les actionneurs (L) et/ou
b) l'électronique de puissance (5) contrôle les actionneurs (L) avec une tension électrique, qui se trouve dans un intervalle de 6 V à 96 V, plus particulièrement dans un intervalle de 12 V à 48 V et/ou
c) l'électronique de puissance (5) contrôle les différents actionneurs (L) de façon à ce que, à travers les différents actionneurs (L), circule un courant électrique qui se trouve dans un intervalle de 0,01 A à 10 A, plus particulièrement dans un intervalle de 0,2 A à 5 A ou de 0,05 A à 1 A et/ou
d) l'électronique de puissance (5) contrôle les actionneurs (L) avec une modulation de largeur d'impulsion avec un rapport cyclique variable ou une modulation de fréquence ou une autre modulation.

3. Tête d'impression (1) selon l'une des revendications précédentes, **caractérisée en ce que** la logique de tête d'impression (6) comprend ce qui suit :
a) une interface de communication pour la communication avec la commande robotique (8),
b) une première unité logique pour le traitement logique des modèles de commutation délivrés par le module graphique (7),
c) un dispositif de synchronisation pour la synchronisation des modèles de commutation délivrés par le module graphique (7) avec la commande robotique (8) et/ou
d) une deuxième unité logique pour la compensation des tolérances dans la chaîne de commande vers les actionneurs (L), afin d'atteindre une synchronisation exacte des différents canaux pour les différents actionneurs (L).

4. Tête d'impression (1) selon l'une des revendications précédentes, **caractérisée en ce que**
a) les actionneurs (L) sont des actionneurs électromagnétiques (L) qui comprennent respectivement une bobine (L),
b) l'électronique de puissance (5) contrôle la bobine (L) d'un des actionneurs (L) pour l'ouverture de la soupape de produit de revêtement correspondante avec un courant initial (ls) et
c) l'électronique de puissance (5) contrôle la bobine (L) d'un des actionneurs (L) pour maintenir ouverte la soupape de produit de revêtement correspondante avec un courant de maintien (I_{H}), dans lequel le courant de maintien (I_{H}) est inférieur au courant initial (ls).

5. Tête d'impression (1) selon l'une des revendications précédentes, **caractérisée en ce que**
a) les actionneurs (L) sont des actionneurs électromagnétiques (L) qui comprennent respectivement une bobine (L),
b) la bobine (L) est reliée, avec une première borne de bobine (9), indépendamment de l'état de commutation, durablement avec une masse ou avec une tension d'alimentation (DC),
c) la bobine (L) est reliée, avec une deuxième borne de bobine (10), par l'intermédiaire d'un élément de commutation contrôlable (S), avec une masse ou avec une tension d'alimentation (DC), et/ou
d) une diode de roue libre (D) est branchée en parallèle à la bobine (L).

6. Tête d'impression (1) selon l'une des revendications 1 à 4, **caractérisée en ce que**
a) les actionneurs (L) sont des actionneurs électromagnétiques (L) qui comprennent respectivement une bobine (L),
b) la bobine (L) est reliée, avec une première borne de bobine (9), par l'intermédiaire d'un premier élément de commutation contrôlable (S1), avec une tension d'alimentation (DC), et
c) la bobine (L) est reliée, avec une deuxième borne de bobine (10), par l'intermédiaire d'un deuxième élément de commutation contrôlable (S2), avec une masse.

7. Tête d'impression (1) selon la revendication 6, **caractérisée en ce que**
a) la bobine (L) est reliée, avec la deuxième borne de bobine (10), par l'intermédiaire d'une deuxième diode de roue libre (D2) ou par l'intermédiaire d'un troisième élément de commutation contrôlable (S4), avec la tension d'alimentation (DC), et/ou
b) la bobine (L) est reliée, avec la première borne de bobine (9), par l'intermédiaire d'une première diode de roue libre (D1) ou d'un quatrième élément de commutation contrôlable (S3), avec une masse, et/ou

8. Tête d'impression (1) selon l'une des revendications précédentes, **caractérisée en ce que**
a) le circuit de commande (5, 6) est intégré dans le boîtier de la tête d'impression (1) et/ou
b) le circuit de commande (5, 6) est intégré dans la bride de raccordement de la tête d'impression (1).

9. Tête d'impression (1) selon l'une des revendications précédentes, **caractérisée en ce que** la tête d'impression (1) est protégée contre les explosions, plus particulièrement selon DIN EN 60079-2, plus particulièrement avec un rinçage par gaz sous pression d'un boîtier de la tête d'impression (1).

10. Robot de revêtement, plus particulièrement robot de peinture, avec une tête d'impression (1) selon l'une des revendications précédentes.

11. Installation de revêtement pour l'application du produit de revêtement, plus particulièrement de la peinture, plus particulièrement sur le composant de carrosserie de véhicule automobile ou la pièce rapportée pour un composant de carrosserie de véhicule automobile, avec
a) le robot de revêtement selon la revendication 10,
b) la commande robotique (8) pour le contrôle programmé du robot de revêtement et
c) le module graphique (7) pour la prescription de modèles de commutation pour les actionneurs (L) en fonction d'un graphisme prédéterminé.

12. Installation de revêtement selon la revendication 11, **caractérisée par** au moins un câble entre la commande robotique (8) et la logique de la tête d'impression (6), dans lequel le câble comprend les bornes suivantes :
a) une alimentation en tension de puissance pour les actionneurs (L), plus particulièrement avec une tension de 48 VDC avec une puissance supérieure à 0,1 kW, supérieure à 0,5 kW ou supérieure à 1 kW,
b) une alimentation en tension de commande pour la logique de la tête d'impression (6) et/ou l'électronique de puissance (5), plus particulièrement avec une tension de 24 VDC,
c) un équilibrage de potentiel et
d) une liaison de communication pour la liaison avec la commande robotique (8), plus particulièrement une liaison Ethernet.

13. Installation de revêtement selon la revendication 12, **caractérisée en ce que** le câble est un câble hybride, dans lequel
a) tous les fils du câble se trouvent sous une enveloppe de protection commune et/ou
b) plusieurs fonctions se partagent un fil commun du câble, plus particulièrement une ligne de masse commune.

14. Installation de revêtement selon l'une des revendications 11 à 13, **caractérisée en ce que**
a) les bornes sur la tête d'impression (1) pour la commande robotique (8), le module graphique (7) et/ou la logique de la tête d'impression (6) sont amovibles, plus particulièrement enfichables et/ou
b) les bornes sur la tête d'impression (1) sont disposées comme suit :
b1)dans un boîtier de la tête d'impression (1),
b2)dans une bride de raccordement de la tête d'impression (1),
b3)à l'extérieur sur le boîtier de la tête d'impression (1) ou
b4)à l'extérieur sur la bride de raccordement de la tête d'impression (1).
